# EUROPEAN PATENT SPECIFICATION

(11) **EP 4 572 350 B1**
(45) Date of publication and mention of the grant of the patent: **28.10.2026**
(21) Application number: 24218371.3
(22) Date of filing: 09.12.2024
(51) Int. Cl.: H04W 4/80, G06Q 20/32, G06Q 20/20

(54) **SERVICE PROCESSING METHOD, APPARATUS, AND DEVICE FOR SMART WATCH**
VERFAHREN, VORRICHTUNG UND GERÄT ZUR DIENSTVERARBEITUNG FÜR EINE SMARTWATCH
PROCÉDÉ, APPAREIL ET DISPOSITIF DE TRAITEMENT DE SERVICE POUR MONTRE INTELLIGENTE

(30) Priority: 13.12.2023 CN 202311715181
(43) Date of publication of application: 18.06.2025
(73) Proprietor: ALIPAY.COM CO., LTD., Shanghai 200120 (CN)
(72) Inventor: YE, Xinting, Shanghai, 200120 (CN)
(74) Representative: Winter, Brandl - Partnerschaft mbB

(56) References cited:
- EP-B1- 3 300 311
- CN-A- 111 741 453
- CN-B- 105 871 425
- US-A1- 2020 053 007
- US-A1- 2020 053 519

## Description

### TECHNICAL FIELD

This specification relates to the field of internet of things technologies, and in particular, to a service processing method, apparatus, and device for a smartwatch.

### BACKGROUND

With the widespread use of smartphones, people increasingly use the smartphones to make electronic payments. In recent years, smartwatches are also gradually emerging, with a growing user base. Compared with the smartphones, the smartwatches provide more convenience in some payment scenarios. Based on this, some smartwatches technically draw on the experience and achievements of mobile phone payments. By integrating two-dimensional code payment and transit code functions into smartwatches, users can easily and conveniently complete some payment operations in life without taking out their smartphones, but by simply raising their wrists and using their smartwatches.

Currently, communication manners of smartwatches on the market include Bluetooth, Wi-Fi, eSIM, etc. Many smartwatches are based on a real-time operating system (RTOS), and include only a Bluetooth communication module. This severely limits payment experience of the smartwatches. Typically, for example, after payments are made, users can only briefly understand, on the smartwatches, that a payment operation is completed. Due to the lack of means to communicate with a serving end, detailed payment result information of a payment serving end cannot be directly obtained on the smartwatches.

Based on this, a solution that can improve a communication capability of such a smartwatch that includes only a Bluetooth communication module to improve payment experience of the smartwatch is required.

Document US 2020/053519 A1 provides systems and methods for delegating communication from a wearable computing device to a remote network via a host computing device connected to the remote network including a data routing service at the wearable computing device that receives data message(s) from an application program interfacing with at least one socket interface. The data message(s) are encapsulated using a transport protocol, and the encapsulated data message(s) are transmitted to a host routing service provided by the host computing device for de-encapsulation and delivery to the remote network.

Document CN 105 871 425 B provides a method for a first device to receive a synchronization message from a second device. The first device receives a remote communication data packet sent by the second device through a relay server. The first device generates a Bluetooth data packet according to the remote communication data packet. The first device parses the Bluetooth data packet and obtains the IM data therein. The first device transmits the IM data to the local IM client. Synchronizing messages between the first device and the second device avoid the problem that the wearable device (i.e. the first device) cannot communicate with the smart terminal (i.e. the second device) when it is out of the range of short-range communication, and enhance instant communication convenience. A portable multifunction device is also provided.

Document CN 111 741 453 A provides bluetooth data encapsulation communication method and device. The method comprises the following steps: setting the transaction information, receiving the card swiping information of the user, and performing TCP (transmission control protocol) packaging and BNEP (bayonet nut seal) packaging to generate a Bluetooth data packet; initiating a BNEP connection request according to the Bluetooth data packet, and establishing BNEP connection with the first terminal as a main device; calling a mobile communication module of a first terminal through BNEP connection, and sending the transaction information and the user card swiping information packaged by TCP in the Bluetooth data package to a background server through the Internet; receiving result information returned by the background server through the first terminal; and confirming that the transaction is completed according to the received and analyzed result information.

Document EP 3 300 311 B1 provides a method and a device for interaction between a smart watch and a WECHAT platform, and a smart watch. Its design concept is: providing a customized browser on an smart watch end, accessing and logging in the webpage edition WECHAT via the customized browser, and on the basis of wireless transmission protocols, causing the smart watch end to exchange data with the WECHAT platform via the customized browser, to realize the replying to WECHAT reminders on the smart watch end.

Document US 2020/053007 A1 describes delegating communication from a wearable computer device to a remote network via a host computing device connected to the remote network may be summarized as including: (a.1) providing, at the host computing device, a host routing service that implements a host data communications endpoint, (a.2) receiving, via the host routing service, one or more data messages formatted according to the Internet Protocol and destined for delivery to an application program at the wearable computing device, (a.3) encapsulating the one or more data messages using a transport protocol, and (a.4) transmitting the one or more data messages to a data routing service of the wearable computing device.

### SUMMARY

The present invention is defined in the appended claims. One or more embodiments of this specification provide a service processing method, apparatus, and device for a smartwatch and a storage medium, to resolve the following technical problem: A solution that can improve a communication capability of such a smartwatch that includes only a Bluetooth communication module to improve payment experience of the smartwatch is required.

To solve the above-mentioned technical problem, the one or more embodiments of this specification are implemented as follows:

One or more embodiments of this specification provide a service processing method for a smartwatch, applied to a watch end on the smartwatch. The method includes:
obtaining Socket communication trigger data;
performing encapsulation by using a short-range wireless communication protocol supported by the smartwatch and based on the Socket communication trigger data, to obtain a first data packet;
sending the first data packet to a mobile phone end on a smartphone by performing short-range wireless communication with the smartphone, so that the mobile phone end parses the first data packet to obtain the Socket communication trigger data, performs Socket communication with a corresponding serving end based on the Socket communication trigger data, and performs encapsulation by using the short-range wireless communication protocol and based on Socket communication response data returned by the serving end, to obtain a second data packet; and
receiving the second data packet returned from the mobile phone end by performing short-range wireless communication with the smartphone, and parsing the second data packet to obtain the Socket communication response data.

One or more embodiments of this specification provide a service processing apparatus for a smartwatch, applied to a watch end on the smartwatch. The apparatus includes:
a trigger data obtaining module, configured to obtain Socket communication trigger data;
a trigger data encapsulation module, configured to perform encapsulation by using a short-range wireless communication protocol supported by the smartwatch and based on the Socket communication trigger data, to obtain a first data packet;
a data packet sending module, configured to send the first data packet to a mobile phone end on a smartphone by performing short-range wireless communication with the smartphone, so that the mobile phone end parses the first data packet to obtain the Socket communication trigger data, performs Socket communication with a corresponding serving end based on the Socket communication trigger data, and performs encapsulation by using the short-range wireless communication protocol and based on Socket communication response data returned by the serving end, to obtain a second data packet; and
a response data obtaining module, configured to: receive the second data packet returned from the mobile phone end by performing short-range wireless communication with the smartphone, and parse the second data packet to obtain the Socket communication response data.

One or more embodiments of this specification provide a service processing device for a smartwatch, applied to a watch end on the smartwatch. The device includes:
at least one processor; and
a memory communicatively connected to the at least one processor.

The memory stores instructions that can be executed by the at least one processor, and the instructions are executed by the at least one processor, to enable the at least one processor to perform the following operations:
obtaining Socket communication trigger data;
performing encapsulation by using a short-range wireless communication protocol supported by the smartwatch and based on the Socket communication trigger data, to obtain a first data packet;
sending the first data packet to a mobile phone end on a smartphone by performing short-range wireless communication with the smartphone, so that the mobile phone end parses the first data packet to obtain the Socket communication trigger data, performs Socket communication with a corresponding serving end based on the Socket communication trigger data, and performs encapsulation by using the short-range wireless communication protocol and based on Socket communication response data returned by the serving end, to obtain a second data packet; and
receiving the second data packet returned from the mobile phone end by performing short-range wireless communication with the smartphone, and parsing the second data packet to obtain the Socket communication response data.

One or more embodiments of this specification provide a nonvolatile computer storage medium, applied to a watch end on a smartwatch. The medium stores computer-executable instructions, and the computer-executable instructions are set to perform the following operations:
obtaining Socket communication trigger data;
performing encapsulation by using a short-range wireless communication protocol supported by the smartwatch and based on the Socket communication trigger data, to obtain a first data packet;
sending the first data packet to a mobile phone end on a smartphone by performing short-range wireless communication with the smartphone, so that the mobile phone end parses the first data packet to obtain the Socket communication trigger data, performs Socket communication with a corresponding serving end based on the Socket communication trigger data, and performs encapsulation by using the short-range wireless communication protocol and based on Socket communication response data returned by the serving end, to obtain a second data packet; and
receiving the second data packet returned from the mobile phone end by performing short-range wireless communication with the smartphone, and parsing the second data packet to obtain the Socket communication response data.

The above-mentioned at least one technical solution used in one or more embodiments of this specification can achieve the following beneficial effects: A Socket communication solution is used as a basic internet access communication protocol of a smartwatch, a smartphone near the smartwatch is used as a proxy, and a capability of short-range wireless communication (Bluetooth communication is used as an example) between a watch end and a mobile phone end and a capability of remote communication between the mobile phone end and a serving end are used. Based on cooperation of the three parties, data related to Socket communication between the watch end and the serving end is encapsulated, parsed, and intermediately transmitted, to indirectly implement Socket communication between the watch end on the smartwatch and the serving end, so as to improve a communication capability of the smartwatch. In this way, service data can be flexibly exchanged between the watch end and the serving end, to help improve payment experience of the smartwatch that includes only a Bluetooth communication module.

### BRIEF DESCRIPTION OF DRAWINGS

To describe the technical solutions in the embodiments of this specification or in the conventional technology more clearly, the following briefly describes the accompanying drawings required for describing the embodiments or the conventional technology. Clearly, the accompanying drawings in the following descriptions merely show some embodiments of this specification, and a person of ordinary skill in the art can still derive other drawings from these accompanying drawings without creative efforts.
FIG. 1 is a schematic flowchart of a service processing method for a smartwatch according to one or more embodiments of this specification;
FIG. 2 is a schematic diagram of a proxy link for completing Socket communication between a watch end and a serving end by using a mobile phone end as a proxy in a scenario according to one or more embodiments of this specification;
FIG. 3 is a schematic flowchart of completing proxy link processing of a single Socket API in a scenario according to one or more embodiments of this specification;
FIG. 4 is a schematic diagram of customizing a parameter related to a Socket() function according to one or more embodiments of this specification;
FIG. 5 is a schematic flowchart of an additional task processing solution of a mobile phone end involved in a watch proxy link in an application scenario according to one or more embodiments of this specification;
FIG. 6 is a schematic flowchart of a dynamic selection solution for a proxy mobile phone end in an application scenario according to one or more embodiments of this specification;
FIG. 7 is a schematic structural diagram of a service processing apparatus for a smartwatch according to one or more embodiments of this specification; and
FIG. 8 is a schematic structural diagram of a service processing device for a smartwatch according to one or more embodiments of this specification.

### DESCRIPTION OF EMBODIMENTS

Embodiments of this specification provide a service processing method, apparatus, and device for a smartwatch, and a storage medium.

To make a person skilled in the art better understand the technical solutions in this specification, the following clearly and comprehensively describes the technical solutions in the embodiments of this specification with reference to the accompanying drawings in the embodiments of this specification. Clearly, the described embodiments are merely some but not all of the embodiments of this specification. All other embodiments obtained by a person of ordinary skill in the art based on the embodiments of this specification without creative efforts shall fall within the protection scope of this specification.

To resolve the problem in the background and improve a communication capability of a smartwatch, the applicant makes some attempts, for example, maintains communication by keeping a sports application of a watch manufacturer alive, or encapsulates HTTP protocol proxy communication at a mobile phone end. However, there are still some problems in these attempts. For example, the former attempt listed is still not flexible enough for a watch end, only messages can be received, and there is no capability of actively obtaining information. In addition, the sports application needs to continuously keep alive to maintain real-time information transmission, resulting in slightly higher resource costs. In the latter attempt listed, HTTP message packets are in a uniform and fixed format and the packet is cumbersome, which is not friendly to Bluetooth communication. In addition, HTTP protocol communication does not have a bidirectional communication function.

To resolve these problems, the applicant proposes a more optimized solution in this specification, to enable a smartwatch to complete internet access communication by using a mobile phone as a proxy, and selects Socket communication as a basic internet access communication protocol of the smartwatch.

Compared with the previous attempt HTTP communication, Socket communication is a lower-level, connection-oriented transport layer communication manner in which a connection is usually established by using a TCP protocol (this manner is mainly used as an example for description) or a connectionless UDP protocol can be used. In Socket communication, no specific data format is stipulated, and a data format and structure can be freely defined. Therefore, two communication parties can independently negotiate and parse data. An overall protocol is simple and encapsulation content is simple. Therefore, the packet is relatively friendly to Bluetooth communication. In addition, in Socket communication, data transmission can be directly performed after a connection is established between the two parties, and bidirectional communication is supported. When a connection is established, information can be actively pushed, without the need for a client to send a request to a server each time.

However, most RTOS smartwatches cannot directly implement a network connection. Therefore, the RTOS smartwatches encapsulate parameters for Socket communication by using existing Bluetooth-related protocols of the RTOS smartwatches, and then forward the parameters to mobile phone ends for parsing, to complete proxy internet access.

Based on such an overall idea, the following continues to describe the solutions of this specification in detail.

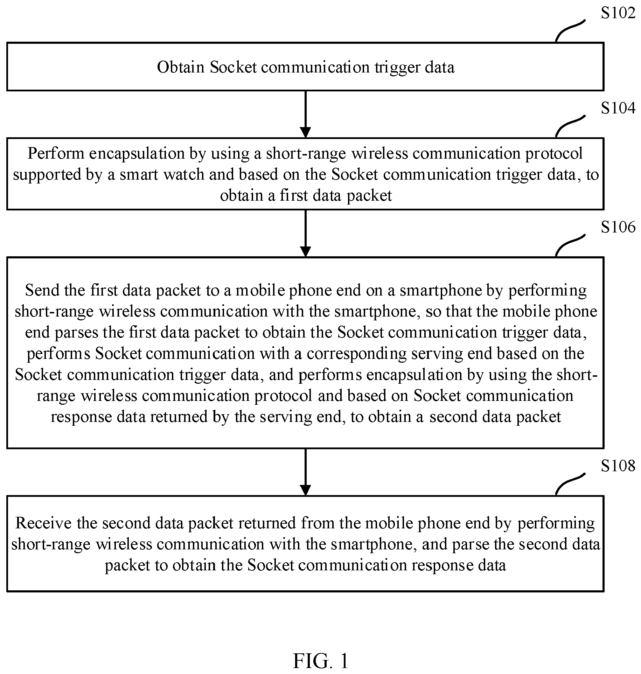

FIG. 1 is a schematic flowchart of a service processing method for a smartwatch according to one or more embodiments of this specification. The procedure can be applied to a watch end on the smartwatch, and has more prominent advantages particularly for a smartwatch that supports only a short-range wireless communication manner such as Bluetooth communication but does not support a network remote communication manner. The procedure is performed by the watch end, and further involves a mobile phone end on a smartphone and a serving end on a server. The watch end and the mobile phone end can be clients of corresponding applications, or embedded application programs (for example, applets) embedded in other application clients. Particularly for the watch end, the watch end can be lighter (with simplified functions, etc.) than the mobile phone end.

The procedure in FIG. 1 includes the following steps.

S102: Obtain Socket communication trigger data.

In one or more embodiments of this specification, the Socket communication trigger data can include data that is used to indirectly perform Socket communication between the watch end and the serving end by using the mobile phone end as a proxy, and is mainly a parameter for Socket communication, etc. The Socket communication trigger data can be specifically used to trigger establishment of a Socket communication connection, or is used to trigger an active request for data at the serving end based on a connection after the connection is established, and in a case of no connection, can be used to trigger active sending of data to the serving end.

In one or more embodiments of this specification, an example in which the Socket communication trigger data is used to trigger establishment of a connection is used. A Socket API parameter structure can be predesigned. Then, a Socket API parameter is encapsulated by using the structure, to obtain a Socket API structure object; and serialization processing is performed on the Socket API structure object, to obtain the Socket communication trigger data. The Socket API is mainly represented as one or more functions, for example, Socket(), Connect(), Send(), and Receive().

In different specific uses, for functions currently involved, appropriate Socket API parameters can be flexibly customized and values can be assigned accordingly.

S104: Perform encapsulation by using a short-range wireless communication protocol supported by the smartwatch and based on the Socket communication trigger data, to obtain a first data packet.

In one or more embodiments of this specification, the smartwatch does not support direct network remote communication, and supports only one or more types of short-range wireless communication. Typically, only Bluetooth communication is supported, as mentioned in the background. In this case, the short-range wireless communication protocol supported by the smartwatch can be a Bluetooth protocol or a Bluetooth low energy (BLE) protocol, and preferably, is the BLE protocol, which is more friendly to the solutions of this specification, and helps ensure battery life extension of the smartwatch.

The smartwatch uses a nearby smartphone (for example, a smartphone held by a user wearing the smartwatch) as a proxy, and needs to transmit the Socket communication trigger data to the smartphone. The smartwatch can perform short-range wireless communication with the smartphone. Therefore, the Socket communication trigger data is correspondingly encapsulated to meet a requirement of short-range wireless communication data transmission. For example, the watch end can encapsulate the Socket communication trigger data into packets by using the BLE protocol, to obtain a plurality of data packets. For ease of distinction, such data packets are referred to as first data packets.

S106: Send the first data packet to a mobile phone end on a smartphone by performing short-range wireless communication with the smartphone, so that the mobile phone end parses the first data packet to obtain the Socket communication trigger data, performs Socket communication with a corresponding serving end based on the Socket communication trigger data, and performs encapsulation by using the short-range wireless communication protocol and based on Socket communication response data returned by the serving end, to obtain a second data packet.

In one or more embodiments of this specification, the watch end and the mobile phone end can belong to a same application, or can belong to different applications. In the latter case, authorization between applications can be performed in advance, so that normal interaction can be performed.

By using the short-range wireless communication protocol, the mobile phone end can at least completely obtain, by parsing the first data packet, the Socket communication trigger data (referred to as raw data for distinction) previously encapsulated by the watch end, and the mobile phone end can directly perform Socket communication with the corresponding serving end based on the raw data. Alternatively, the mobile phone end can perform more complex processing on the raw data based on a requirement, to obtain distinct new data, use the new data as the obtained Socket communication trigger data, and perform Socket communication with the corresponding serving end based on the Socket communication trigger data.

In one or more embodiments of this specification, the watch end and the corresponding serving end can belong to a same application or different applications in a cooperative relationship.

In the payment scenario mentioned in the background, the watch end and the serving end can belong to payment applications or payment channel applications. The payment application is, for example, a third-party payment application, and the payment channel application is, for example, an application of a bank with which a third-party payment application cooperates. When a third-party payment is made, deduction can be performed from a bank card issued by the bank, to complete the payment. For example, the watch end and the serving end belong to a same third-party payment application; or the watch end belongs to a third-party payment application, and the serving end belongs to an application of a bank that cooperates with the third-party payment application; and so on.

In one or more embodiments of this specification, how the serving end responds depends on a current use of the Socket communication trigger data. If the mobile phone end and the serving end do not respond to establish a connection, a connection can be established based on the Socket communication trigger data. If a connection is established, the serving end can perform corresponding service processing based on a service involved in the Socket communication trigger data, to obtain a service processing result, and return the service processing result to the mobile phone end through the connection in a form of Socket communication response data.

S108: Receive the second data packet returned from the mobile phone end by performing short-range wireless communication with the smartphone, and parse the second data packet to obtain the Socket communication response data.

In one or more embodiments of this specification, after obtaining the Socket communication response data returned by the serving end, the mobile phone end can similarly completely encapsulate the Socket communication response data, and further return the Socket communication response data to the watch end, or can perform more complex processing, encapsulate data that is not exactly the same as the raw response data, and return the data to the watch end. Certainly, either manner can be used provided that it is ensured that a current service requirement of the watch end is met based on the Socket communication response data obtained by the watch end by parsing the second data packet. The latter more complex processing manner can further help the mobile phone end to additionally meet a service requirement of the mobile phone end. An example is provided below for description.

Based on such a short-range communication process and a Socket communication process indirectly completed based on a proxy, in a payment scenario, even for a smartwatch that includes only a Bluetooth communication module, a watch end on the smartwatch can conveniently obtain detailed payment result information from a payment serving end in a timely manner, and display the detailed payment result information to a user.

According to the method in FIG. 1, a Socket communication solution is used as a basic internet access communication protocol of a smartwatch, a smartphone near the smartwatch is used as a proxy, and a capability of short-range wireless communication (Bluetooth communication is used as an example) between a watch end and a mobile phone end and a capability of remote communication between the mobile phone end and a serving end are used. Based on cooperation of the three parties, data related to Socket communication between the watch end and the serving end is encapsulated, parsed, and intermediately transmitted, to indirectly implement Socket communication between the watch end on the smartwatch and the serving end, so as to improve a communication capability of the smartwatch. In this way, service data can be flexibly exchanged between the watch end and the serving end, to help improve payment experience of the smartwatch that includes only a Bluetooth communication module.

Based on the method in FIG. 1, this specification further provides some specific implementation solutions and extension solutions of the method, which are further described below.

In one or more embodiments of this specification, in the above-mentioned example manner of implementing active triggering and returning a response, the watch end can actively obtain information from the serving end. Similarly, the watch end can actively send information to the serving end in this manner. Certainly, bidirectional communication can also be implemented based on Socket communication, and it is not necessary for the watch end to actively initiate interaction.

A specified connection used for the above-mentioned Socket communication performed with the serving end by using the mobile phone end as a proxy identity is referred to as a watch proxy connection. It can be learned from the above-mentioned descriptions that the watch proxy connection is triggered to be established based on short-range wireless communication between the watch end and the mobile phone end. After the watch proxy connection is established, the mobile phone end may not need to actively request the serving end, but passively receive, by performing short-range wireless communication with the smartphone, information that is sent by the mobile phone end and that is actively pushed by the serving end through the watch proxy connection.

For example, when a watch payment is made through the watch end, the watch payment can be specifically completed through two-dimensional code scanning interaction or short-range wireless communication between the smartphone and a target checkout device. After deduction is successfully performed, the serving end actively pushes detailed payment result information corresponding to the watch payment through the watch proxy connection, and the mobile phone end on the smartphone sends the detailed payment result information to the watch end through short-range wireless communication. The detailed payment result information can include information such as an actual payment amount and/or an account balance after the payment, so that the user more clearly understands a change involved in the payment.

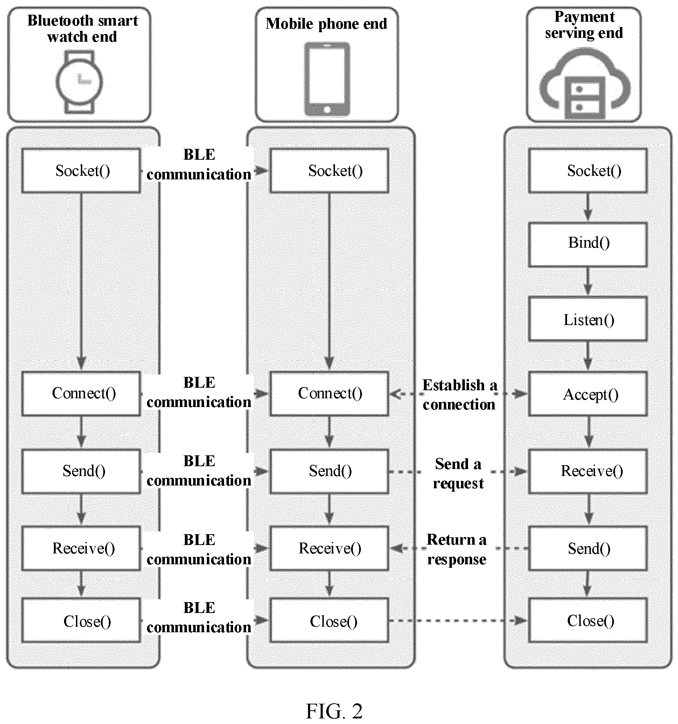

It can be learned from the above-mentioned descriptions that this specification provides a proxy link for completing Socket communication between the watch end and the serving end by using the mobile phone end as a proxy. For a more intuitive view, refer to FIG. 2. FIG. 2 is a schematic diagram of the proxy link in a scenario according to one or more embodiments of this specification. In this scenario, the serving end is specifically a payment serving end. The smartwatch can include only a Bluetooth communication module, and the watch end on the smartwatch is referred to as a Bluetooth smartwatch end.

In the link shown in FIG. 2, communication is performed between the Bluetooth smartwatch end and the mobile phone end by using, for example, the BLE protocol. In this case, the mobile phone end is used as a proxy of the Bluetooth smartwatch end to perform, for example, TCP protocol-based Socket communication, with the serving end. This can intuitively reflect a reference logic link design idea for transitioning from a network protocol (for example, a TCP/IP protocol) to a Bluetooth-related protocol (for example, a Bluetooth protocol/BLE protocol).

In the link, protocol layer locations and uses of functions involved in Socket communication at each end are shown. In the link, a spatial dimension shows flow of data between the three ends based on different protocols, and a time dimension shows establishment of a Socket communication connection. Further, data exchange can continue to be performed based on the connection by sending a request and returning a response, and the connection can be closed as required. For example, for the Bluetooth smartwatch end and the mobile phone end, functions such as Socket() and Connect() can be involved in a phase of establishing the Socket communication connection, and functions such as Send(), Receive(), and Close() can be involved in a subsequent phase; and for the payment serving end, functions such as Socket(), Bind(), Listen(), and Accept() can be involved in the phase of establishing the Socket communication connection, and functions such as Receive(), Send(), and Close() can be involved in the subsequent phase.

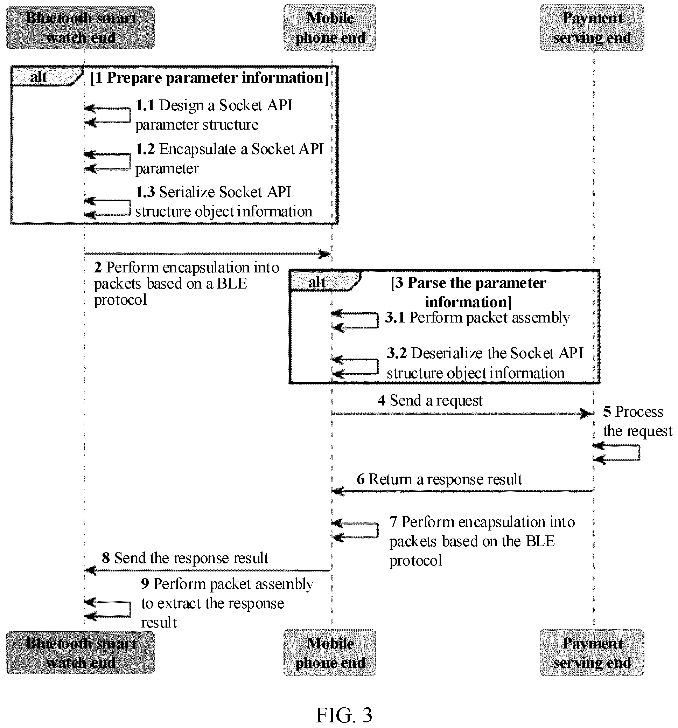

Further, one or more embodiments of this specification further provide a schematic flowchart of completing proxy link processing of a single Socket API in a scenario, as shown in FIG. 3. This can be understood with reference to the above-mentioned descriptions and the following example, and some content is not described.

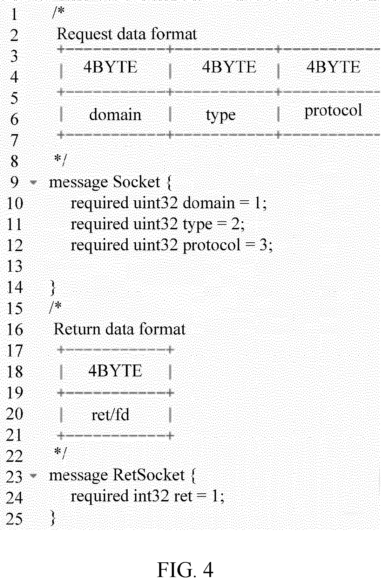

The procedure in FIG. 3 mainly includes processes such as serialization and deserialization of a Socket parameter, encapsulation into packets based on the BLE protocol, and packet assembly. Intuitively, a specific customized socket() function is used as an example for description. FIG. 4 shows a definition of a parameter related to the socket() function.

In FIG. 4, three parameter fields used for the socket() function are defined, including a 4-byte "domain" (representing a protocol domain) field, an 8-byte "type" (representing a socket type) field, and a 4-byte "protocol" (representing a transmission protocol) field. In addition, a data structure "RetSocket" is defined to return response data to the watch end.

Based on these definitions, for example, the socket() function used in the procedure in FIG. 3 is defined as follows:
"int socket (int domain, int type, int protocol)".

Specifically, the procedure mainly includes the following steps.

The socket() function is used as an example. In the first step in establishing a communication connection, the watch end used as a client needs to send basic information such as the protocol domain, the socket type, and the transmission protocol to the serving end. The serving end creates a socket object based on the parameter information provided by the watch end, to establish a communication infrastructure for both parties. Therefore, the parameter information of the socket() function needs to be correctly transmitted across platforms to the mobile phone end, and the mobile phone end initiates a connection to the serving end on behalf of the watch end. The mobile phone end transmits an invocation result of the socket() function across platforms to the watch end, to complete a complete data transmission process.

Serialization protocols that can be used include Protocol Buffers, JSON, Thrift, etc. The Protocol Buffers protocol is used as an example. The Protocol Buffers protocol is an efficient binary serialization protocol, provides a convenient manner to serialize and deserialize structured data, and is designed to enable data to be transmitted between different platforms and languages without errors. By using this protocol, a complex data structure can be converted into a compact and efficient binary format, to implement efficient data transmission and storage.

Based on this, an example serialization and deserialization process is as follows:
1. The following steps need to be completed at the watch end: First, a structure and a field Socket of a message need to be defined, and compilation is performed to generate code in a target language. Then, a field value of the message can be set by using a generated class or structure. Once the field value of the message is set, a serialization method can be invoked to convert the message data into a binary format. In this way, the data can be transmitted and stored in a binary form between different platforms.
2. By using the BLE protocol at the watch end, the serialized binary data is split into packets and sent to the mobile phone end. After performing packet assembly, the mobile phone end restores the binary data to a message object by using a deserialization method. In a deserialization process, the binary data is converted into a message object with a corresponding field value based on a message structure Socket and a field sequence defined in advance at the watch end. Then, the mobile phone end invokes the socket() function on behalf of the watch end, and sends a request to the serving end.
3. After receiving the socket request sent by the watch end, the serving end performs a series of processing, and returns a result to the mobile phone end. After receiving the returned result, the mobile phone end sets the result into the defined data structure RetSocket; and then serializes the data, splits the data into packets by using the BLE protocol, and then sends the data to the watch end.
4. The watch end performs parsing based on the defined data structure RetSocket, to obtain the result. In this case, the watch end completes the first step of Socket communication, and therefore subsequent connection establishment can be performed.

Other functions involved below can also be processed in a similar manner.

According to the solutions in FIG. 2 and FIG. 3, a BLE internet access specification of the Bluetooth watch end can be established, and a procedure system can be improved, to improve user experience. By using the Socket communication solution as a basic internet access communication protocol of the smartwatch, the two communication parties can independently negotiate and parse data. An overall protocol is simple and encapsulation content is simple. In addition, in Socket communication, data transmission can be directly performed after a connection is established between the two parties. When a connection is established, information can be actively pushed, without the need for the watch end to send a request to the serving end each time. Therefore, the problems in the background and the attempt solutions mentioned above can be resolved.

In one or more embodiments of this specification, additional processing resources need to be consumed when the mobile phone end is used as a proxy. To fully use these processing resources, the mobile phone end uses a communication requirement between the mobile phone end and the serving end to complete proxy work. In this case, the mobile phone end gains more active control, and avoids additional burden on the mobile phone end. In addition, the watch end has more choices for the mobile phone end on the smartphone, which helps optimize global resource configuration.

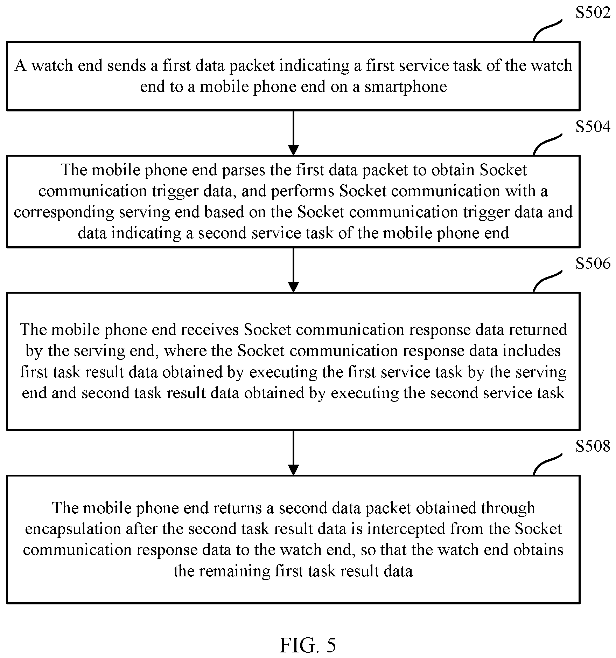

Based on this idea, it is considered that the mobile phone end should not merely forward data from the other two ends in a proxy process, but performs the more complex processing mentioned above on the data, to meet an original communication requirement of the mobile phone end. Specifically, one or more embodiments of this specification provide a schematic flowchart of an additional task processing solution of a mobile phone end involved in a watch proxy link in an application scenario, as shown in FIG. 5.

The procedure in FIG. 5 includes the following steps.

S502: The watch end sends the first data packet indicating a first service task of the watch end to the mobile phone end on the smartphone.

The first service task is a service task that needs to be currently completed by the watch end, for example, establishing a connection to the serving end and transmitting corresponding service data (for example, payment service data) based on the connection.

S504: The mobile phone end parses the first data packet to obtain the Socket communication trigger data, and performs Socket communication with the corresponding serving end based on the Socket communication trigger data and data indicating a second service task of the mobile phone end.

In one or more embodiments of this specification, the second service task is a service task of the mobile phone end, can be unrelated to the watch end, and may not be in a direct relationship with the first service task. The first service task and the second service task can belong to different services (for example, the first service task can belong to a payment service, and the second service task can belong to an instant messaging service), and the watch end and the mobile phone end can even belong to different applications. In conclusion, even if the second service task is not executed, based on the proxy link described above, the first service task can be normally executed to complete the above-mentioned Socket communication.

In this case, a main objective of the mobile phone end is actually to complete the second service task of the mobile phone end, while being incidentally used as a proxy to help the watch end to complete the first service task of the watch end.

S506: The mobile phone end receives the Socket communication response data returned by the serving end, where the Socket communication response data includes first task result data obtained by executing the first service task by the serving end and second task result data obtained by executing the second service task.

In one or more embodiments of this specification, the serving end is responsible for executing the two types of tasks, and it can be unnecessary to clearly determine specific ends that need the two types of tasks. Therefore, the task result data of the two types of tasks can be uniformly placed in the Socket communication response data, and returned to the mobile phone end by using one message (that is, the Socket communication response data).

S508: The mobile phone end returns the second data packet obtained through encapsulation after the second task result data is intercepted from the Socket communication response data to the watch end, so that the watch end obtains the remaining first task result data.

The mobile phone end mainly needs to obtain the second task result data in the Socket communication response data. In addition, this part of data can preferably not be exposed to the watch end, especially in a case in which the two ends do not belong to a same application. Similarly, the mobile phone end can ensure, based on a predetermined security policy, that although the second service task and/or the second task result data need/needs to be transmitted by the watch end, corresponding plaintext is not exposed to the watch end. Based on this, the mobile phone end can intercept the second task result data from the Socket communication response data, perform encapsulation based on the remaining data after the interception, to obtain the second data packet, and return the second data packet to the watch end, so that the watch end can obtain the first task result data without obtaining the second task result data.

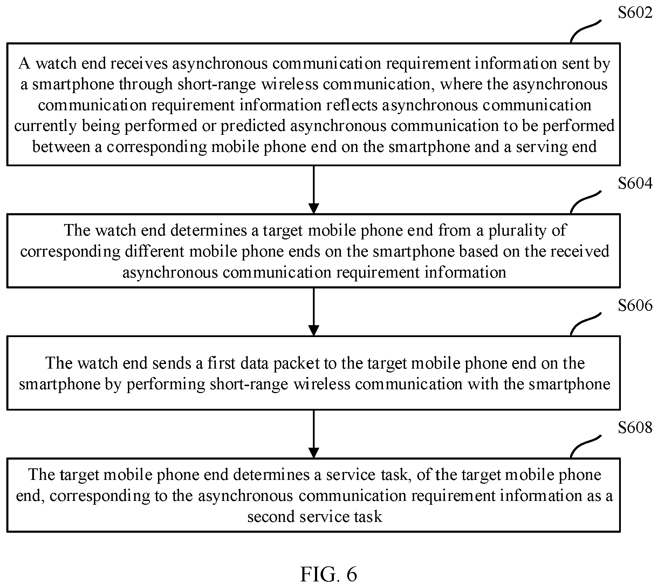

Further, to respond to the watch end in a more timely manner, based on a dynamic task requirement status of different mobile phone ends on the smartphone, a mobile phone end that is currently more suitable for being used as a proxy can be dynamically selected from these mobile phone ends. Based on this, one or more embodiments of this specification further provide a schematic flowchart of a dynamic selection solution for a proxy mobile phone end in an application scenario, as shown in FIG. 6.

The procedure in FIG. 6 includes the following steps.

S602: The watch end receives asynchronous communication requirement information sent by the smartphone through short-range wireless communication, where the asynchronous communication requirement information reflects asynchronous communication currently being performed or predicted asynchronous communication to be performed between a corresponding mobile phone end on the smartphone and the serving end.

In one or more embodiments of this specification, at least one mobile phone end that is in a plurality of different mobile phone ends on the smartphone and that currently has a service task that can be delayed for execution (which means that the service task can be delayed for execution at a time after a current moment) can be determined as a target mobile phone end. In this case, the service task that can be delayed for execution can be determined as the second service task. This can motivate the target mobile phone end to accept a proxy identity, and accelerate execution of the service task that can be delayed for execution.

S604: The watch end determines the target mobile phone end from the plurality of corresponding different mobile phone ends on the smartphone based on the received asynchronous communication requirement information.

In this procedure, an asynchronous communication status is used as an example, and a service task to be executed through asynchronous communication is a service task that can be delayed for execution. It should be noted that in another scenario, there may also be a service task that can be delayed for execution, for example, a timing service task for which an execution moment is not reached, or a polling service task, which can be used as a basis to determine the target mobile phone end in a similar manner.

S606: The watch end sends the first data packet to the target mobile phone end on the smartphone by performing short-range wireless communication with the smartphone.

S608: The target mobile phone end determines a service task, of the target mobile phone end, corresponding to the asynchronous communication requirement information as the second service task.

The target mobile phone end can use a service task that is of the target mobile phone end and that can be delayed for execution as the second service task.

According to the solutions in FIG. 5 and FIG. 6, cooperation value between the watch end and the mobile phone end is further improved, and from a global perspective, it helps improve task execution efficiency and resource utilization.

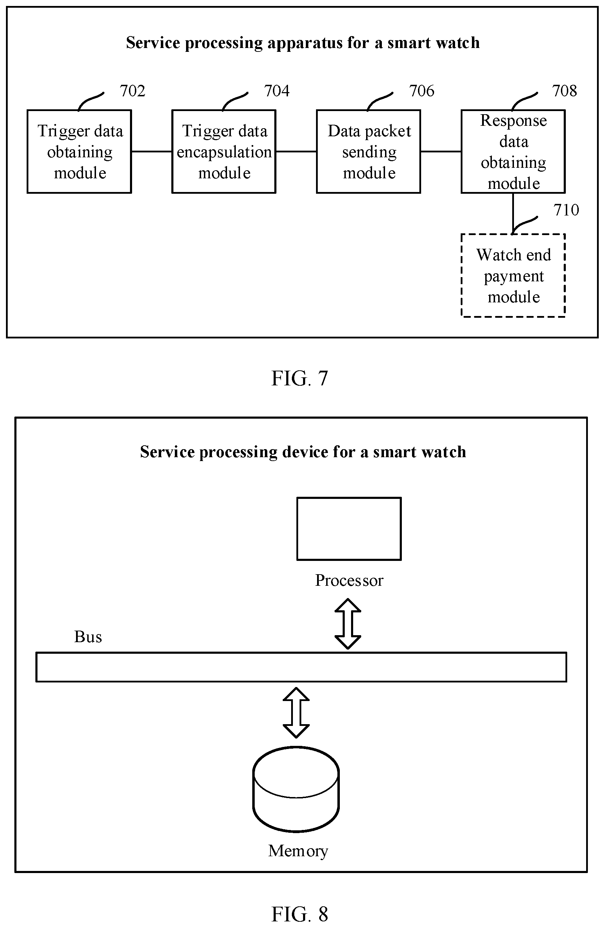

Based on the same idea, one or more embodiments of this specification further provide an apparatus and a device corresponding to the above-mentioned method, as shown in FIG. 7 and FIG. 8. The apparatuses and the devices can correspondingly perform the above-mentioned method and related optional solutions.

FIG. 7 is a schematic structural diagram of a service processing apparatus for a smartwatch according to one or more embodiments of this specification. The apparatus is applied to a watch end on the smartwatch, and the apparatus includes:
a trigger data obtaining module 702, configured to obtain Socket communication trigger data;
a trigger data encapsulation module 704, configured to perform encapsulation by using a short-range wireless communication protocol supported by the smartwatch and based on the Socket communication trigger data, to obtain a first data packet;
a data packet sending module 706, configured to send the first data packet to a mobile phone end on a smartphone by performing short-range wireless communication with the smartphone, so that the mobile phone end parses the first data packet to obtain the Socket communication trigger data, performs Socket communication with a corresponding serving end based on the Socket communication trigger data, and performs encapsulation by using the short-range wireless communication protocol and based on Socket communication response data returned by the serving end, to obtain a second data packet; and
a response data obtaining module 708, configured to: receive the second data packet returned from the mobile phone end by performing short-range wireless communication with the smartphone, and parse the second data packet to obtain the Socket communication response data.

Optionally, the trigger data obtaining module 702 is configured to: encapsulate a Socket API parameter based on a predesigned Socket API parameter structure, to obtain a Socket API structure object; and
perform serialization processing on the Socket API structure object, to obtain the Socket communication trigger data.

Optionally, the trigger data encapsulation module 704 is configured to encapsulate the Socket communication trigger data into packets to obtain a plurality of first data packets, so that after obtaining the plurality of first data packets, the mobile phone end correspondingly assembles and parses the packets to obtain the Socket communication trigger data.

Optionally, the response data obtaining module 708 is configured to: after a specified watch proxy connection between the mobile phone end and the serving end is established, receive, by performing short-range wireless communication with the smartphone, information that is sent by the mobile phone end and that is actively pushed by the serving end through the watch proxy connection, where
the watch proxy connection is triggered to be established based on short-range wireless communication between the watch end and the mobile phone end.

Optionally, the watch end and the serving end belong to payment applications or payment channel applications;
the apparatus further includes:
a watch end payment module 710, configured to: before the information that is sent by the mobile phone end and that is actively pushed by the serving end through the watch proxy connection is received, make a watch payment through the watch end, where the watch payment is completed through two-dimensional code scanning interaction or short-range wireless communication between the smartphone and a target checkout device; and
the response data obtaining module 708 is configured to receive detailed payment result information that corresponds to the watch payment, that is sent by the mobile phone end, and that is actively pushed by the serving end through the watch proxy connection, where the detailed payment result information includes at least an actual payment amount and an account balance after the payment.

Optionally, the data packet sending module 706 is configured to send the first data packet indicating a first service task of the watch end to the mobile phone end on the smartphone, so that the mobile phone end parses the first data packet to obtain the Socket communication trigger data, and performs Socket communication with the corresponding serving end based on the Socket communication trigger data and data indicating a second service task of the mobile phone end, where
the second data packet is obtained through encapsulation after the mobile phone end intercepts, from the Socket communication response data, second task result data obtained by executing the second service task by the serving end, so that the watch end obtains remaining first task result data obtained by executing the first service task by the serving end.

Optionally, the watch end and the mobile phone end respectively belong to different applications, or the first service task and the second service task belong to different services.

Optionally, the data packet sending module 706 is configured to: determine at least one mobile phone end that is in a plurality of different mobile phone ends on the smartphone and that currently has a service task that can be delayed for execution as a target mobile phone end; and
send the first data packet to the target mobile phone end on the smartphone by performing short-range wireless communication with the smartphone, so that the target mobile phone end uses the service task that can be delayed for execution as the second service task.

Optionally, the data packet sending module 706 is configured to: receive asynchronous communication requirement information sent by the smartphone through short-range wireless communication, where the asynchronous communication requirement information reflects asynchronous communication currently being performed or predicted asynchronous communication to be performed between a corresponding mobile phone end on the smartphone and the serving end; and
determine the target mobile phone end from the plurality of corresponding different mobile phone ends on the smartphone based on the received asynchronous communication requirement information.

Optionally, the short-range wireless communication protocol is a Bluetooth protocol or a BLE protocol.

FIG. 8 is a schematic structural diagram of a service processing device for a smartwatch according to one or more embodiments of this specification. The apparatus is applied to a watch end on the smartwatch, and the device includes:
at least one processor; and
a memory communicatively connected to the at least one processor.

The memory stores instructions that can be executed by the at least one processor, and the instructions are executed by the at least one processor, to enable the at least one processor to perform the following operations:
obtaining Socket communication trigger data;
performing encapsulation by using a short-range wireless communication protocol supported by the smartwatch and based on the Socket communication trigger data, to obtain a first data packet;
sending the first data packet to a mobile phone end on a smartphone by performing short-range wireless communication with the smartphone, so that the mobile phone end parses the first data packet to obtain the Socket communication trigger data, performs Socket communication with a corresponding serving end based on the Socket communication trigger data, and performs encapsulation by using the short-range wireless communication protocol and based on Socket communication response data returned by the serving end, to obtain a second data packet; and
receiving the second data packet returned from the mobile phone end by performing short-range wireless communication with the smartphone, and parsing the second data packet to obtain the Socket communication response data.

Based on the same idea, one or more embodiments of this specification further provide a nonvolatile computer storage medium, applied to a watch end on a smartwatch. The medium stores computer-executable instructions, and the computer-executable instructions are set to perform the following operations:
obtaining Socket communication trigger data;
performing encapsulation by using a short-range wireless communication protocol supported by the smartwatch and based on the Socket communication trigger data, to obtain a first data packet;
sending the first data packet to a mobile phone end on a smartphone by performing short-range wireless communication with the smartphone, so that the mobile phone end parses the first data packet to obtain the Socket communication trigger data, performs Socket communication with a corresponding serving end based on the Socket communication trigger data, and performs encapsulation by using the short-range wireless communication protocol and based on Socket communication response data returned by the serving end, to obtain a second data packet; and
receiving the second data packet returned from the mobile phone end by performing short-range wireless communication with the smartphone, and parsing the second data packet to obtain the Socket communication response data.

In the 1990s, whether a technical improvement is a hardware improvement (for example, an improvement to a circuit structure such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer independently performs programming to "integrate" a digital system onto a PLD, without requesting a chip manufacturer to design and manufacture a dedicated integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). At present, the Very-High-Speed Integrated Circuit Hardware Description Language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

A controller can be implemented in any suitable manner. For example, the controller can be in a form such as a microprocessor, a processor, or a computer-readable medium, a logic gate, a switch, an application-specific integrated circuit (ASIC), a programmable logic controller, or an embedded microcontroller storing computer-readable program code (such as software or firmware) that can be executed by the (micro)processor. Examples of the controller include but are not limited to the following microcontrollers: ARC 625D, Atmel AT91SAM, Microchip PIC18F26K20, and Silicone Labs C8051F320. A memory controller can also be implemented as a part of control logic of the memory. A person skilled in the art also knows that in addition to implementing the controller by using only the computer-readable program code, logic programming can be performed on method steps to enable the controller to implement the same function in a form of a logic gate, a switch, an application specific integrated circuit, a programmable logic controller, or an embedded microcontroller. Therefore, the controller can be considered as a hardware component, and an apparatus configured to implement various functions in the controller can also be considered as a structure in the hardware component. Alternatively, an apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is described by dividing functions into various units. Certainly, during implementation of this specification, functions of units can be implemented in the same or more software or hardware.

A person skilled in the art should understand that the embodiments of this specification can be provided as methods, systems, or computer program products. Therefore, the embodiments of this specification can use a form of hardware only embodiments, software only embodiments, or embodiments with a combination of software and hardware. In addition, the embodiments of this specification can use a form of a computer program product that is implemented on one or more computer-usable storage media (including but not limited to a disk storage, a CD-ROM, an optical storage, etc.) that include computer-usable program code.

This specification is described with reference to the flowcharts and/or block diagrams of the method, the device (system), and the computer program product according to the embodiments of this specification. It should be understood that each procedure and/or block in the flowcharts and/or the block diagrams and a combination of procedures and/or blocks in the flowcharts and/or the block diagrams can be implemented by using computer program instructions. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more procedures in the flowcharts and/or in one or more blocks in the block diagrams.

Alternatively, these computer program instructions can be stored in a computer-readable memory that can instruct a computer or another programmable data processing device to work in a specific manner, so the instructions stored in the computer-readable memory generate an artifact that includes an instruction apparatus. The instruction apparatus implements a specific function in one or more procedures in the flowcharts and/or in one or more blocks in the block diagrams.

Alternatively, these computer program instructions can be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPUs), one or more input/output interfaces, one or more network interfaces, and one or more memories.

The memory can include a form such as a non-permanent memory, a random access memory (RAM), or a nonvolatile memory in a computer-readable medium, for example, a read-only memory (ROM) or a flash memory (flash RAM). The memory is an example of the computer-readable medium.

The computer-readable medium includes persistent, non-persistent, removable and non-removable media that can store information by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be configured to store information that can be accessed by a computing device. Based on the definition in this specification, the computer-readable medium does not include transitory media such as a modulated data signal and carrier.

It should be further noted that the terms "include", "comprise", or any other variants thereof are intended to cover a non-exclusive inclusion, so that a process, a method, a product, or a device that includes a list of elements not only includes those elements but also includes other elements which are not expressly listed, or further includes elements inherent to such s process, method, product, or device. Without more constraints, an element preceded by "includes a ..." does not preclude the presence of additional identical elements in the process, method, product, or device that includes the element.

This specification can be described in a general context of a computer-executable instruction executed by a computer, for example, a program module. Generally, the program module includes a routine, a program, an object, a component, a data structure, etc. for executing a specific task or implementing a specific abstract data type. This specification can alternatively be practiced in distributed computing environments. In the distributed computing environments, tasks are executed by remote processing devices connected through a communication network. In the distributed computing environment, a program module can be located in local and remote computer storage media including a storage device.

The embodiments of this specification are described in a progressive manner. For same or similar parts in the embodiments, mutual references can be made to the embodiments. Each embodiment focuses on a difference from other embodiments. In particular, the apparatus embodiments, the device embodiments, and the nonvolatile computer storage medium embodiments are basically similar to the method embodiments, and therefore are described briefly. For related parts, references can be made to some descriptions of the method embodiments.

Specific embodiments of this specification are described above. Other embodiments fall within the scope of the appended claims. In some cases, the actions or steps described in the claims can be performed in a sequence different from that in the embodiments and desired results can still be achieved. In addition, the process depicted in the accompanying drawings does not necessarily need a particular sequence or consecutive sequence to achieve the desired results. In some implementations, multi-tasking and concurrent processing are feasible or may be advantageous.

The above-mentioned descriptions are merely one or more embodiments of this specification and are not intended to limit this specification. A person skilled in the art can make various changes and variations to one or more embodiments of this specification.

## Claims

1. A service processing method for a smartwatch, applied to a watch end on the smartwatch, wherein the method comprises:
obtaining (S102) Socket communication trigger data;
performing (S104) encapsulation by using a short-range wireless communication protocol supported by the smartwatch and based on the Socket communication trigger data, to obtain a first data packet;
sending (S106) the first data packet to a mobile phone end on a smartphone by performing short-range wireless communication with the smartphone, so that the mobile phone end parses the first data packet to obtain the Socket communication trigger data, performs Socket communication with a corresponding serving end based on the Socket communication trigger data, and performs encapsulation by using the short-range wireless communication protocol and based on Socket communication response data returned by the serving end, to obtain a second data packet; and
receiving (S108) the second data packet returned from the mobile phone end by performing short-range wireless communication with the smartphone, and parsing the second data packet to obtain the Socket communication response data;
wherein obtaining (S102) the Socket communication trigger data specifically comprises:
encapsulating a Socket API parameter based on a predesigned Socket API parameter structure, to obtain a Socket API structure object; and
performing serialization processing on the Socket API structure object, to obtain the Socket communication trigger data.

2. The method according to claim 1, wherein performing (S104) the encapsulation based on the Socket communication trigger data, to obtain a first data packet specifically comprises:
encapsulating the Socket communication trigger data into packets to obtain a plurality of first data packets, so that after obtaining the plurality of first data packets, the mobile phone end correspondingly assembles and parses the packets to obtain the Socket communication trigger data.

3. The method according to claim 1, further comprising:
after a specified watch proxy connection between the mobile phone end and the serving end is established, receiving, by performing short-range wireless communication with the smartphone, information that is sent by the mobile phone end and that is actively pushed by the serving end through the watch proxy connection, wherein
the watch proxy connection is triggered to be established based on short-range wireless communication between the watch end and the mobile phone end.

4. The method according to claim 3, wherein the watch end and the serving end belong to payment applications or payment channel applications;
before the receiving information that is sent by the mobile phone end and that is actively pushed by the serving end through the watch proxy connection, the method further comprises:
making a watch payment through the watch end, wherein the watch payment is completed through two-dimensional code scanning interaction or short-range wireless communication between the smartphone and a target checkout device; and
the receiving information that is sent by the mobile phone end and that is actively pushed by the serving end through the watch proxy connection specifically comprises:
receiving detailed payment result information that corresponds to the watch payment, that is sent by the mobile phone end, and that is actively pushed by the serving end through the watch proxy connection, wherein the detailed payment result information comprises at least an actual payment amount and an account balance after the payment.

5. The method according to claim 1, wherein sending (S106) the first data packet to the mobile phone end on the smartphone specifically comprises:
sending the first data packet indicating a first service task of the watch end to the mobile phone end on the smartphone, so that the mobile phone end parses the first data packet to obtain the Socket communication trigger data, and performs Socket communication with the corresponding serving end based on the Socket communication trigger data and data indicating a second service task of the mobile phone end, wherein
the second data packet is obtained through encapsulation after the mobile phone end intercepts, from the Socket communication response data, second task result data obtained by executing the second service task by the serving end, so that the watch end obtains remaining first task result data obtained by executing the first service task by the serving end.

6. The method according to claim 5, wherein the watch end and the mobile phone end respectively belong to different applications, or the first service task and the second service task belong to different services.

7. The method according to claim 5, wherein sending (S106) the first data packet to the mobile phone end on the smartphone by performing short-range wireless communication with the smartphone specifically comprises:
determining at least one mobile phone end that is in a plurality of different mobile phone ends on the smartphone and that currently has a service task that can be delayed for execution as a target mobile phone end; and
sending the first data packet to the target mobile phone end on the smartphone by performing short-range wireless communication with the smartphone, so that the target mobile phone end uses the service task that can be delayed for execution as the second service task.

8. The method according to claim 7, wherein determining the at least one mobile phone end that is in the plurality of different mobile phone ends on the smartphone and that currently has the service task that can be delayed for execution as the target mobile phone end specifically comprises:
receiving asynchronous communication requirement information sent by the smartphone through short-range wireless communication, wherein the asynchronous communication requirement information reflects asynchronous communication currently being performed or predicted asynchronous communication to be performed between a corresponding mobile phone end on the smartphone and the serving end; and
determining the target mobile phone end from the plurality of corresponding different mobile phone ends on the smartphone based on the received asynchronous communication requirement information.

9. The method according to any one of claims 1 to 8, wherein the short-range wireless communication protocol is a Bluetooth protocol or a Bluetooth low energy protocol.

10. A service processing device for a smartwatch, applied to a watch end on the smartwatch, wherein the device comprises:
at least one processor; and
a memory communicatively connected to the at least one processor, wherein
the memory stores instructions that can be executed by the at least one processor, and the instructions are executed by the at least one processor, to enable the at least one processor to perform operations according to any one of claims 1 to 9.

11. A computer-readable storage medium that stores a computer program, wherein when executed on a computer, the computer program causes the computer to perform the method according to any one of claims 1 to 9.

12. A computer program comprising computer executable instructions which when executed by a processor cause the processor to implement the method of any one of claims 1 to 9.

13. An apparatus comprising means for performing the steps of the method of any one of claims 1 to 9.

## Patentansprüche

1. Dienstverarbeitungsverfahren für eine Smartwatch, die auf ein uhrseitiges Ende an der Smartwatch angewendet wird, wobei das Verfahren die Folgenden Schritte umfasst:
Erhalten (S102) von Socket-Kommunikationsauslösedaten;
Durchführen (S104) einer Kapselung unter Verwendung eines von der Smartwatch unterstützten drahtlosen Nahbereichskommunikationsprotokolls und basierend auf den Socket-Kommunikationsauslösedaten, um ein erstes Datenpaket zu erhalten;
Senden (S106) des ersten Datenpakets an ein Mobiltelefonende an einem Smartphone durch Durchführen drahtloser Nahbereichskommunikation mit dem Smartphone, so dass das Mobiltelefonende das erste Datenpaket parst, um die Socket-Kommunikationsauslösedaten zu erhalten, eine Socket-Kommunikation mit einem entsprechenden dienenden Ende basierend auf den Socket-Kommunikationsauslösedaten durchführt und eine Kapselung unter Verwendung des drahtlosen Nahbereichskommunikationsprotokolls und basierend auf von dem dienenden Ende zurückgegebenen Socket-Kommunikationsantwortdaten durchführt, um ein zweites Datenpaket zu erhalten; und
Empfangen (S108) des von dem Mobiltelefonende zurückgegebenen zweiten Datenpakets durch Durchführen drahtloser Nahbereichskommunikation mit dem Smartphone und Parsen des zweiten Datenpakets, um die Socket-Kommunikationsantwortdaten zu erhalten;
wobei das Erhalten (S102) der Socket-Kommunikationsauslösedaten spezifisch umfasst:
Kapseln eines Socket-API-Parameters basierend auf einer vorab entworfenen Socket-API-Parameterstruktur, um ein Socket-API-Strukturobjekt zu erhalten; und
Durchführen einer Serialisierungsverarbeitung an dem Socket-API-Strukturobjekt, um die Socket-Kommunikationsauslösedaten zu erhalten.

2. Verfahren nach Anspruch 1, wobei das Durchführen (S104) der Kapselung basierend auf den Socket-Kommunikationsauslösedaten, um ein erstes Datenpaket zu erhalten, spezifisch umfasst:
Kapseln der Socket-Kommunikationsauslösedaten in Pakete, um eine Mehrzahl von ersten Datenpaketen zu erhalten, so dass nach dem Erhalten der Mehrzahl von ersten Datenpaketen das Mobiltelefonende die Pakete entsprechend zusammensetzt und parst, um die Socket-Kommunikationsauslösedaten zu erhalten.

3. Verfahren nach Anspruch 1, ferner umfassend:
nachdem eine spezifizierte Uhr-Proxy-Verbindung zwischen dem Mobiltelefonende und dem dienenden Ende hergestellt worden ist, Empfangen von Informationen, die von dem Mobiltelefonende gesendet und von dem dienenden Ende über die Uhr-Proxy-Verbindung aktiv übertragen werden, durch Durchführen drahtloser Nahbereichskommunikation mit dem Smartphone, wobei
die Herstellung der Uhr-Proxy-Verbindung basierend auf drahtloser Nahbereichskommunikation zwischen dem uhrseitigen Ende und dem Mobiltelefonende ausgelöst wird.

4. Verfahren nach Anspruch 3, wobei das uhrseitige Ende und das dienende Ende zu Zahlungsanwendungen oder Zahlungskanalanwendungen gehören;
wobei das Verfahren vor dem Empfangen der von dem Mobiltelefonende gesendeten und von dem dienenden Ende über die Uhr-Proxy-Verbindung aktiv übertragenen Informationen ferner umfasst:
Tätigen einer Uhrenzahlung über das uhrseitige Ende, wobei die Uhrenzahlung durch Interaktion zum Scannen eines zweidimensionalen Codes oder durch drahtlose Nahbereichskommunikation zwischen dem Smartphone und einem Ziel-Kassengerät abgeschlossen wird; und
wobei das Empfangen der von dem Mobiltelefonende gesendeten und von dem dienenden Ende über die Uhr-Proxy-Verbindung aktiv übertragenen Informationen spezifisch umfasst:
Empfangen detaillierter Zahlungsergebnisinformationen, die der Uhrenzahlung entsprechen, die von dem Mobiltelefonende gesendet und von dem dienenden Ende über die Uhr-Proxy-Verbindung aktiv übertragen werden, wobei die detaillierten Zahlungsergebnisinformationen mindestens einen tatsächlichen Zahlungsbetrag und einen Kontostand nach der Zahlung umfassen.

5. Verfahren nach Anspruch 1, wobei das Senden (S106) des ersten Datenpakets an das Mobiltelefonende an dem Smartphone spezifisch umfasst:
Senden des ersten Datenpakets, das eine erste Dienstaufgabe des uhrseitigen Endes angibt, an das Mobiltelefonende an dem Smartphone, so dass das Mobiltelefonende das erste Datenpaket parst, um die Socket-Kommunikationsauslösedaten zu erhalten, und basierend auf den Socket-Kommunikationsauslösedaten und Daten, die eine zweite Dienstaufgabe des Mobiltelefonendes angeben, eine Socket-Kommunikation mit dem entsprechenden dienenden Ende durchführt, wobei
das zweite Datenpaket durch Kapselung erhalten wird, nachdem das Mobiltelefonende aus den Socket-Kommunikationsantwortdaten zweite Aufgabenergebnisdaten abfängt, die durch Ausführen der zweiten Dienstaufgabe durch das dienende Ende erhalten wurden, so dass das uhrseitige Ende verbleibende erste Aufgabenergebnisdaten erhält, die durch Ausführen der ersten Dienstaufgabe durch das dienende Ende erhalten wurden.

6. Verfahren nach Anspruch 5, wobei das uhrseitige Ende und das Mobiltelefonende jeweils zu unterschiedlichen Anwendungen gehören oder die erste Dienstaufgabe und die zweite Dienstaufgabe zu unterschiedlichen Diensten gehören.

7. Verfahren nach Anspruch 5, wobei das Senden (S106) des ersten Datenpakets an das Mobiltelefonende an dem Smartphone durch Durchführen drahtloser Nahbereichskommunikation mit dem Smartphone spezifisch umfasst:
Bestimmen mindestens eines Mobiltelefonendes aus einer Mehrzahl verschiedener Mobiltelefonenden an dem Smartphone, das aktuell eine Dienstaufgabe aufweist, deren Ausführung verzögert werden kann, als Ziel-Mobiltelefonende; und
Senden des ersten Datenpakets an das Ziel-Mobiltelefonende an dem Smartphone durch Durchführen drahtloser Nahbereichskommunikation mit dem Smartphone, so dass das Ziel-Mobiltelefonende die Dienstaufgabe, deren Ausführung verzögert werden kann, als die zweite Dienstaufgabe verwendet.

8. Verfahren nach Anspruch 7, wobei das Bestimmen des mindestens einen Mobiltelefonendes aus der Mehrzahl verschiedener Mobiltelefonenden an dem Smartphone, das aktuell die Dienstaufgabe aufweist, deren Ausführung verzögert werden kann, als Ziel-Mobiltelefonende spezifisch umfasst:
Empfangen von durch das Smartphone über drahtlose Nahbereichskommunikation gesendeten Anforderungsinformationen für asynchrone Kommunikation, wobei die Anforderungsinformationen für asynchrone Kommunikation eine aktuell zwischen einem entsprechenden Mobiltelefonende an dem Smartphone und dem dienenden Ende durchgeführte oder vorhergesagte durchzuführende asynchrone Kommunikation wiedergeben; und
Bestimmen des Ziel-Mobiltelefonendes aus der Mehrzahl entsprechender verschiedener Mobiltelefonenden an dem Smartphone basierend auf den empfangenen Anforderungsinformationen für asynchrone Kommunikation.

9. Verfahren nach einem der Ansprüche 1 bis 8, wobei das drahtlose Nahbereichskommunikationsprotokoll ein Bluetooth-Protokoll oder ein Bluetooth-Low-Energy-Protokoll ist.

10. Dienstverarbeitungsvorrichtung für eine Smartwatch, die auf ein uhrseitiges Ende an der Smartwatch angewendet wird, wobei die Vorrichtung Folgendes umfasst:
mindestens einen Prozessor; und
einen Speicher, der kommunikativ mit dem mindestens einen Prozessor verbunden ist, wobei der Speicher Anweisungen speichert, die durch den mindestens einen Prozessor ausgeführt werden können, und die Anweisungen durch den mindestens einen Prozessor ausgeführt werden, um den mindestens einen Prozessor dazu zu veranlassen, Vorgänge gemäß einem der Ansprüche 1 bis 9 durchzuführen.

11. Computerlesbares Speichermedium, das ein Computerprogramm speichert, wobei das Computerprogramm bei seiner Ausführung auf einem Computer bewirkt, dass der Computer das Verfahren nach einem der Ansprüche 1 bis 9 durchführt.

12. Computerprogramm, das computerausführbare Anweisungen umfasst, die bei ihrer Ausführung durch einen Prozessor bewirken, dass der Prozessor das Verfahren nach einem der Ansprüche 1 bis 9 implementiert.

13. Vorrichtung, die Mittel zum Durchführen der Schritte des Verfahrens nach einem der Ansprüche 1 bis 9 umfasst.

## Revendications

1. Procédé de traitement de service pour une montre connectée, appliqué à une extrémité montre de la montre connectée, dans lequel le procédé comprend :
l'obtention (S102) de données de déclenchement de communication par socket ;
la réalisation (S104) d'une encapsulation en utilisant un protocole de communication sans fil à courte portée pris en charge par la montre connectée et basé sur les données de déclenchement de communication par socket, afin d'obtenir un premier paquet de données ;
l'envoi (S106) du premier paquet de données à une extrémité téléphone mobile sur un smartphone en réalisant une communication sans fil à courte portée avec le smartphone, de sorte que le téléphone mobile analyse le premier paquet de données afin d'obtenir les données de déclenchement de communication par socket, réalise une communication par socket avec une extrémité de desserte correspondante sur la base des données de déclenchement de communication par socket, et réalise une encapsulation en utilisant le protocole de communication sans fil à courte portée et sur la base de données de réponse de communication par socket renvoyées par l'extrémité de desserte, afin d'obtenir un second paquet de données ; et
la réception (S108) du second paquet de données renvoyé à partir de l'extrémité téléphone mobile en réalisant une communication sans fil à courte portée avec le smartphone, et l'analyse du second paquet de données afin d'obtenir les données de réponse de communication par socket ;
dans lequel l'obtention (S102) des données de déclenchement de communication par socket comprend spécifiquement :
l'encapsulation d'un paramètre d'API de socket sur la base d'une structure de paramètre d'API de socket préconçue, afin d'obtenir un objet de structure d'API de socket ; et
la réalisation d'un traitement de sérialisation sur l'objet de structure d'API de socket, afin d'obtenir les données de déclenchement de communication par socket.

2. Procédé selon la revendication 1, dans lequel la réalisation (S104) de l'encapsulation sur la base des données de déclenchement de communication par socket, afin d'obtenir un premier paquet de données comprend spécifiquement :
l'encapsulation des données de déclenchement de communication par socket dans des paquets afin d'obtenir une pluralité de premiers paquets de données, de sorte qu'après avoir obtenu la pluralité de premiers paquets de données, l'extrémité téléphone mobile assemble et analyse de manière correspondante les paquets afin d'obtenir les données de déclenchement de communication par socket.

3. Procédé selon la revendication 1, comprenant en outre :
une fois qu'une connexion par mandataire de montre spécifiée est établie entre l'extrémité téléphone mobile et l'extrémité de desserte, la réception, en réalisant une communication sans fil à courte portée avec le smartphone, d'informations qui sont envoyées par l'extrémité téléphone mobile et qui sont activement poussées par l'extrémité de desserte via la connexion par mandataire de montre, dans lequel
la connexion par mandataire de montre est déclenchée pour être établie sur la base d'une communication sans fil à courte portée entre l'extrémité montre et l'extrémité téléphone mobile.

4. Procédé selon la revendication 3, dans lequel l'extrémité montre et l'extrémité de desserte appartiennent à des applications de paiement ou à des applications de canal de paiement ;
avant la réception d'informations qui sont envoyées par l'extrémité téléphone mobile et qui sont activement poussées par l'extrémité de desserte via la connexion par mandataire de montre, le procédé comprend en outre :
la réalisation d'un paiement par montre via l'extrémité montre, dans lequel le paiement par montre est effectué via une interaction de lecture de code bidimensionnel ou une communication sans fil à courte portée entre le smartphone et un dispositif de caisse cible ; et
la réception d'informations qui sont envoyées par l'extrémité téléphone mobile et qui sont activement poussées par l'extrémité de desserte via la connexion par mandataire de montre comprend spécifiquement :
la réception d'informations de résultat de paiement détaillées qui correspondent au paiement par montre, qui sont envoyées par l'extrémité téléphone mobile et qui sont activement poussées par l'extrémité de desserte via la connexion par mandataire de montre, dans lequel les informations de résultat de paiement détaillées comprennent au moins un montant de paiement réel et un solde de compte après le paiement.

5. Procédé selon la revendication 1, dans lequel l'envoi (S106) du premier paquet de données à l'extrémité téléphone mobile sur le smartphone comprend spécifiquement :
l'envoi du premier paquet de données indiquant une première tâche de service de l'extrémité montre à l'extrémité téléphone mobile sur le smartphone, de sorte que l'extrémité téléphone mobile analyse le premier paquet de données afin d'obtenir les données de déclenchement de communication par socket et réalise une communication par socket avec l'extrémité de desserte correspondante sur la base des données de déclenchement de communication par socket et de données indiquant une seconde tâche de service de l'extrémité téléphone mobile, dans lequel
le second paquet de données est obtenu via une encapsulation après que l'extrémité téléphone mobile a intercepté, à partir des données de réponse de communication par socket, des secondes données de résultat de tâche obtenues en exécutant la seconde tâche de service par l'extrémité de desserte, de sorte que l'extrémité montre obtienne des premières données de résultat de tâche restantes obtenues par exécution de la première tâche de service par l'extrémité de desserte.

6. Procédé selon la revendication 5, dans lequel l'extrémité montre et l'extrémité téléphone mobile appartiennent respectivement à des applications différentes, ou la première tâche de service et la seconde tâche de service appartiennent à des services différents.

7. Procédé selon la revendication 5, dans lequel l'envoi (S106) du premier paquet de données à l'extrémité téléphone mobile sur le smartphone en réalisant une communication sans fil à courte portée avec le smartphone comprend spécifiquement :
la détermination d'au moins une extrémité téléphone mobile qui est dans une pluralité d'extrémités téléphones mobiles différentes sur le smartphone et qui présente couramment une tâche de service qui peut être différée pour exécution en tant qu'extrémité téléphone mobile cible ; et
l'envoi du premier paquet de données à l'extrémité téléphone mobile cible sur le smartphone en réalisant une communication sans fil à courte portée avec le smartphone, de sorte que l'extrémité téléphone mobile cible utilise la tâche de service qui peut être différée pour exécution en tant que seconde tâche de service.

8. Procédé selon la revendication 7, dans lequel la détermination de la au moins une extrémité téléphone mobile qui est dans la pluralité d'extrémités téléphones mobiles différentes sur le smartphone et qui présente couramment la tâche de service qui peut être différée pour exécution en tant qu'extrémité téléphone mobile cible comprend spécifiquement :
la réception d'informations d'exigences de communication asynchrone envoyées par le smartphone via une communication sans fil à courte portée, dans lequel les informations d'exigences de communication asynchrone reflètent une communication asynchrone en cours de réalisation ou une communication asynchrone prévue devant être réalisée entre une extrémité téléphone mobile correspondante sur le smartphone et l'extrémité de desserte ; et
la détermination de l'extrémité téléphone mobile cible parmi la pluralité d'extrémités téléphones mobiles différentes correspondantes sur le smartphone sur la base des informations d'exigences de communication asynchrone reçues.

9. Procédé selon l'une quelconque des revendications 1 à 8, dans lequel le protocole de communication sans fil à courte portée est un protocole Bluetooth ou un protocole Bluetooth basse consommation.

10. Dispositif de traitement de service pour une montre connectée, appliqué à une extrémité montre sur la montre connectée, dans lequel le dispositif comprend :
au moins un processeur ; et
une mémoire connectée de manière communicative au au moins un processeur, dans lequel
la mémoire stocke des instructions qui peuvent être exécutées par le au moins un processeur, et les instructions sont exécutées par le au moins un processeur, pour permettre au au moins un processeur de réaliser des opérations selon l'une quelconque des revendications 1 à 9.

11. Support de stockage lisible par ordinateur qui stocke un programme informatique, dans lequel, lorsqu'il est exécuté sur un ordinateur, le programme informatique amène l'ordinateur à réaliser le procédé selon l'une quelconque des revendications 1 à 9.

12. Programme informatique comprenant des instructions exécutables par ordinateur qui, lorsqu'elles sont exécutées par un processeur, amènent le processeur à mettre en œuvre le procédé selon l'une quelconque des revendications 1 à 9.

13. Appareil comprenant des moyens pour réaliser les étapes du procédé selon l'une quelconque des revendications 1 à 9.
